(19) Europäisches Patentamt / European Patent Office / Office européen des brevets

(11) **EP 1 948 491 B1**

(12) **EUROPEAN PATENT SPECIFICATION**

(45) Date of publication and mention
of the grant of the patent:
**15.06.2011 Bulletin 2011/24**

(21) Application number: **06806486.4**

(22) Date of filing: **24.10.2006**

(51) Int Cl.:
**B60S 3/06** (2006.01)

(86) International application number:
**PCT/EP2006/010219**

(87) International publication number:
**WO 2007/048568 (03.05.2007 Gazette 2007/18)**

(54) **BRUSH CONTROL METHOD AND DEVICE ON AN AUTOMATIC CAR-WASH INSTALLATION**

BÜRSTENSTEUERVERFAHREN UND VORRICHTUNG AN EINER AUTOMATISCHEN AUTOWASCHANLAGE

PROCEDE ET DISPOSITIF DE COMMANDE DE BROSSE DANS UNE INSTALLATION DE LAVAGE DE VOITURES AUTOMATIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.10.2005 IT MI20052040**

(43) Date of publication of application:
**30.07.2008 Bulletin 2008/31**

(73) Proprietor: **Ceccato, S.p.A.**
**36041 Alte Ceccato di Montecchio Maggiore (IT)**

(72) Inventors:
• **DE SILVIO, Marcelo**
**I-36100 Vicenza (IT)**
• **PILLON, Pierangelo**
**I-36040 Brendola (IT)**
• **SIGNORE, Maurizio**
**I-36077 Altavilla Vicentina (IT)**

(74) Representative: **Rapisardi, Mariacristina**
**Ufficio Brevetti Rapisardi S.r.l.**
**Via Serbelloni 12**
**20122 Milano (IT)**

(56) References cited:
EP-A2- 1 188 628    DE-A1- 1 580 403
GB-A- 1 299 293    US-A- 4 689 749

## Description

The present invention relates to a method and device for controlling the brush action on an automatic car-wash installation, in particular but not exclusively in relation to the horizontal brush.

The control system for the horizontal brush action on automatic car-wash installation whether " arch" or "tunnel" type, is the deciding factor for washing speed and quality.

In fact, the control system operates by trying to follow the exact profile of the vehicle with the washing brush at a certain speed, while maintaining an established level of brush depression and contact pressure on the surface to be washed.

Traditional control systems for the horizontal brush on automatic car-wash installations are generally of the discontinuous type, i.e., they execute the regulation according to variable signals between a considerable plurality of levels in a manner in order to break up the actual profile of the vehicle to be copied into a copy profile composed of "steps". DE 1580403 A1 discloses a brush control method and device according to the preamble of claims 1 and 6.

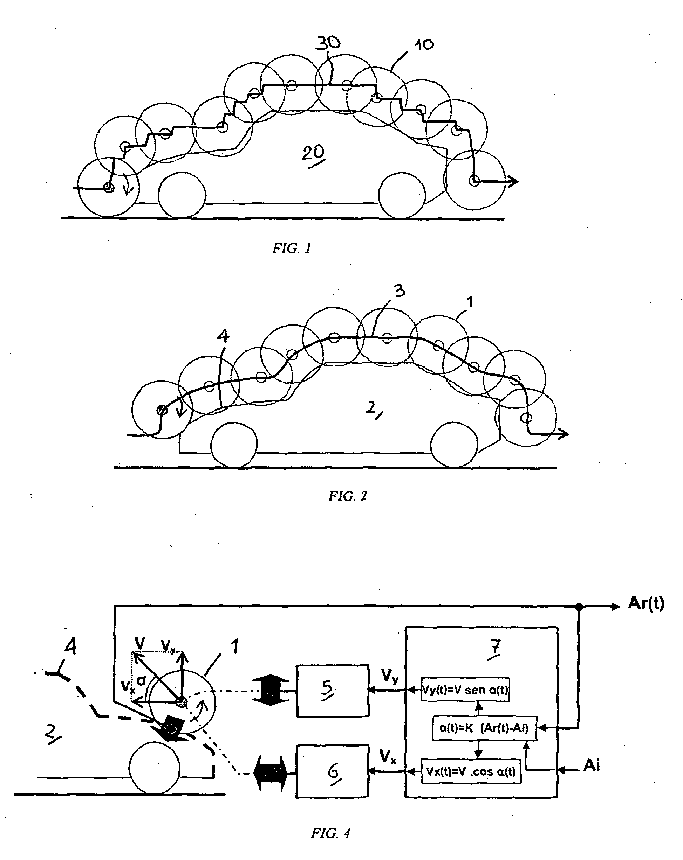

Figure 1 shows a copy profile 30 described on a vehicle 20 by a brush 10 controlled in a traditional manner.

This type of control systems create a compromise which often penalises the washing quality and time required: the "steps" that make up the copy profile become inefficient because they make the copied profile course longer, thus increasing the washing time, and because oscillation is provoked in the depression or pressure of the brush on the bodywork reducing washing quality and increasing the probability of detachments or areas which do not come into contact with the brush.

Moreover, since the washing action is particularly visible to the public, the accuracy of the contact between the horizontal brush and the vehicle surface becomes the direct measuring stick for evaluating the care taken in vehicle washing.

In this way, the visual effect of an oscillating copying action lacking in precision gives the customer an impression of a lack of efficiency when washing his vehicle.

The technical task proposed by the present invention is to provide a brush control method and device for an automatic car-wash installation that is able to eliminate the technical problems currently present in the known art.

Within the context of this technical task, one object of the present invention is to provide a brush control method and device for an automatic car-wash installation that produces excellent washing quality in the shortest possible time.

Another object of the present invention is to provide a brush control method and device for an automatic car-wash installation that also provides the visual impression of a careful accurate washing action.

The technical task, including these and other objects, is achieved with the creation of a brush control method and device for an automatic car-wash installation according to the independent claims described below.

Advantageously, the control system is able to copy the profile of the vehicle with a constant brush depression action along the total washing course, at varying running speeds, and suited to all existing washing brush types, preventing oscillation, lack of contact and variations in contact pressure in different surface stretches of the vehicle bodywork.

Advantageously, precise and accurate vehicle profile copying optimises washing action quality, while minimising washing time at the same time, and providing a washing action with a more pleasing and satisfactory visual impact.

Further characteristics and advantages of the invention will be made more apparent from the following description of a preferred but not exclusive embodiment of the brush control method and device for an automatic car-wash installation according to the invention, illustrated in the appended drawings as examples, but which are by no means limiting, wherein:

Figure 1 shows the step-type profile copying system obtained using traditional car-wash horizontal brush control methods;

Figure 2 shows the profile copying system obtained using the car-wash horizontal brush control method according to the present invention;

Figure 3 shows a schematic view of the physical variables possible with the control method according to the present invention;

Figure 4 shows the implementing of a vector system with tangent control according to the present invention; and

Figure 5 shows the operating principle of the control system according to the present invention in graphic form, wherein the depression action of the brush is defined by the distance between the vehicle profile and a broken line.

The brush control method for an automatic car-wash installation is illustrated with reference to the appended figures.

To provide an example, we will assume that the control relates to the horizontal brush 1 on an arch or tunnel type car-wash installation, but it can be applied to any other kind of brush for car washing.

The control method comprises setting an ideal depression level or contact pressure level between brush 1 and vehicle 2, detecting the actual depression or contact pressure level between brush 1 and vehicle 2 and, when there exists a difference between the ideal and actual depression levels, changing the relative action speed vector between brush 1 and vehicle 2 in such a manner to maintain the vector at the correct tangent to the profile of the vehicle 2.

The control method is conceived to modify the speed vector angle, and in particular, said angle is modified by increasing it gradually as the actual depression level is increased, and reducing it as the actual depression level is reduced.

More precisely, the speed vector angle is modified in proportion with the variation in the actual brush depression level, while the absolute value of the speed vector is maintained constant during the variation of the actual depression action.

The speed vector is advantageously controlled in a continuous manner so that it creates a profile copy 3 that follows the exact profile 4 of the vehicle 2 with great accuracy.

The control device comprises a programmable logic controller (PLC) 7, means for detecting the actual depression or contact pressure level between the brush 1 and the vehicle 2, and means for the continuous modification of the relative action speed vector $\underline{V}$ between brush 1 and the vehicle 2 in order to maintain the vector at the correct tangent to the profile 4 of the vehicle 2.

The detection means preferably comprise an analogue detector to read the rotation motor absorption of brush 1.

The modification means preferably comprise a comparator to measure the difference between an ideal depression level and the actual depression level, and at least an inverter of the continuous control of the speed vector angle $\underline{V}$.

It is well known that in order to simplify mechanical construction, the relative motion between the brush 1 and the vehicle 2 is created along two travel axes Y and X, which are at right angles to each other.

In particular, the control device drives the vertical brush 1 travel system 5 along the Y axis, and the horizontal travel along the X axis of the arch (on arch-type washing installations) or the traction chain of vehicle 2 (on tunnel-type car wash installations).

Both travel systems 5 and 6 comprise a variable speed reducer, with electronic control by inverter and analogue systems.

Instead of controlling the vertical Vy and the horizontal Vx components of the speed vector $\underline{V}$ separately, as occurs at present on traditional car-wash systems, the present invention advantageously proposes the direct control of the speed vector $\underline{V}$ direction in order to maintain it at the correct tangent with the vehicle profile in every single point, and to guarantee a uniform depression level.

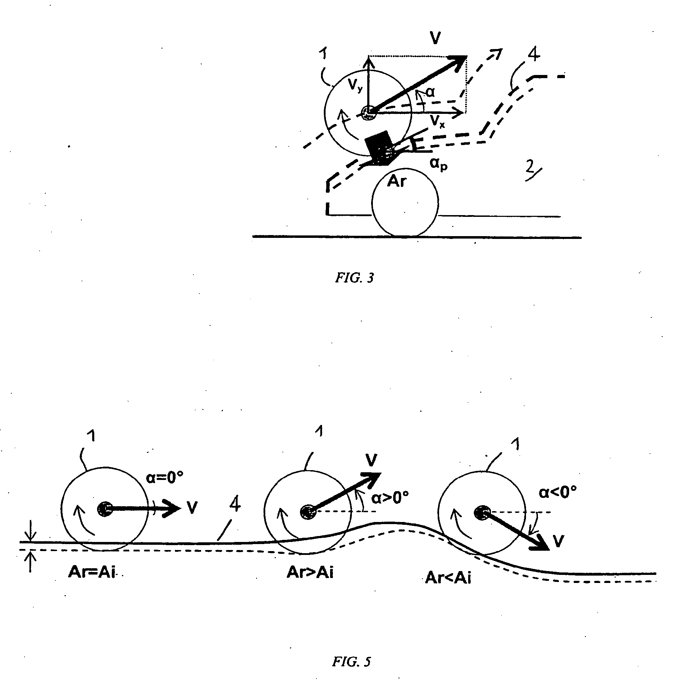

The physical variables that describe the system with precision as shown in figures 3, 4, and 5 are as follows:

Vx=Vx(t) component along X axis of vector $\underline{V}$ according to time t;

Vy=Vy(t) component along Y axis of vector $\underline{V}$ according to time t;

V=V(t) module of vector $\underline{V}$ according to time t;

$\alpha=\alpha$ (t) angle of vector $\underline{V}$ according to time t;

$\alpha p$, angle of profile;

$(\alpha-\alpha p)= (\alpha-\alpha p)(t)$, angle of incidence of the brush on the vehicle profile, according to time t;

Ar=Ar(t), actual depression of the brush on the vehicle profile, according to time t;

Ai, ideal depression of the brush on the vehicle profile;

By analysing figures 3, 4, and 5, it can be seen that in order to maintain the required depression level, the speed vector $\underline{V}$ must always be set at the correct tangent to the vehicle profile.

Therefore the control device associates $\alpha$ directly with the Ar signal derived from the depression level. In other words, the control device increases $\alpha$ in proportion with the increase in depression Ar, and inversely, reduces $\alpha$ in proportion with the reduction in depression Ar.

This control system ensures that the angle of incidence $(\alpha-\alpha p)$ is maintained at practically zero level and the vector $\underline{V}$ results at the correct tangent to profile 4 of vehicle 2.

Module V of speed $\underline{V}$ has no influence on the copying action and can be set at a constant value.

By considering a linear ratio with the depression value Ar, and assuming that Ai is the reference depression value when $\alpha=0°$, the result is as follows:

$$\alpha(t)=K(Ar-Ai),$$

where

K is a constant;

V(t) constant.

Therefore, to represent $\underline{V}$, the following linear transformation can be applied:

$$Vy=Vsin\alpha(t)$$

$$Vx=Vcos\alpha(t)$$

Naturally the respective signals Vx and Vy are applied to the inverters or electronic speed reducers of travel systems 5 and 6 that control these actions.

As stated previously, the signals Vx and Vy are advantageously subjected to a continuous type variation by the control unit, which in turn operates in a continuous manner: this provides a control system with extremely high accuracy and precision.

The parameters that define the copying characteristics of profile 4 of the vehicle are therefore the depression level and the required tangential speed, and these are the aspects that determine the washing quality, which remains advantageously unchanged and uniform along the total profile 4 of vehicle 2.

Since the control system uses the shortest course in order to retrace the profile 4 of the vehicle 2, this results in a considerable reduction in washing time. In other words, the same washing time will produce a far higher washing quality because of the fact that the brush remains in contact with the surface to be washed for a longer period.

The control system of the present invention also advantageously allows the brush to follow any recessed areas on the surface to be washed in a natural manner, above all the areas on a downward slope or at the exit. For example, the type of control system of the present invention is able to move the horizontal brush under the rear spoiler on a vehicle.

Washing action performed using the control system according to the present invention also provides a much-improved visual effect giving the customer an impression of greater cleaning precision and accuracy.

The control principle described in the present invention can be applied to other types of installation.

The brush control method for an automatic car-wash installation conceived in this manner can be subjected to various modifications and variants while remaining within the context of the invention; furthermore, all components can be replaced with other technically equivalent elements.

**Claims**

1.  A brush control method on an automatic car-wash installation, comprising the setting of an ideal level of depression or contact pressure between the brush (1) and the vehicle (2), the detection of the actual level of depression or contact pressure between the brush (1) and the vehicle (2), and, in order to compensate any difference between the ideal level and the actual level of depression, the changing of the relative motion speed vector between the brush (1) and the vehicle (2) so that it is maintained tangent to the profile (4) of the vehicle (2), **characterised in that** the absolute value of said speed vector is maintained constant during any variation of said actual depression level.

2.  A brush control method on an automatic car-wash installation according to claim 1, **characterised in that** the angle of said speed vector is modified.

3.  A brush control method on an automatic car-wash installation according to one or more of the previous claims, **characterised in that** said angle is modified by increasing it according to the increase of said actual depression level, and reducing it according to the reduction of said actual depression level.

4.  A brush control method on an automatic car-wash installation according to one or more of the previous claims, **characterised in that** said angle is modified in proportion to the variation of said actual depression level.

5.  A brush control method on an automatic car-wash installation according to one or more of the previous claims, **characterised in that** the continuous control of said speed vector is performed to obtain a profile copy (3) that reproduces the exact profile (4) of the said vehicle (2).

6.  A brush control device on an automatic car-wash installation according to one or more of the previous claims, comprising a programmable logic controller (7), means for detecting the actual depression or contact pressure level between the brush (1) and the vehicle (2), and means to continuously modify the relative action speed vector between said brush (1) and said vehicle (2) in order to maintain it tangent to the vehicle profile (4) to compensate any difference between the said actual depression and the ideal depression levels, **characterised in that** it comprises means for maintaining the absolute value of said speed vector constant during assay variation of said actual depression level.

7.  Control device according to the previous claim, **characterised in that** said means of detection comprise an analogue sensor to read the rotation motor absorption of said brush (1).

8.  Control device according to one or more previous claims, **characterised in that** said modification means comprise a comparator to measure the difference between an ideal level and said actual depression level, and at least one inverter for continuous control of the angle of said speed vector.

9.  Automatic installation for automatic car washing **characterised in that** it comprises a control system in compliance with one or more of the previous claims.

## Patentansprüche

1. Bürstensteuerungsverfahren für eine automatische Autowaschanlage, umfassend das Einstellen eines idealen Grades an Unterdruck oder Kontaktdruck zwischen der Bürste (1) und dem Fahrzeug (2), das Erfassen des tatsächlichen Grades an Unterdruck oder Kontaktdruck zwischen der Bürste (1) und dem Fahrzeug (2) und, um jegliche Unterschiede zwischen dem idealen Grad und dem tatsächlichen Grad an Unterdruck zu kompensieren, das Ändern des relativen Vektors der Bewegungsgeschwindigkeit zwischen der Bürste (1) und dem Fahrzeug (2), so dass sie das Profil (4) des Fahrzeugs (2) tangierend gehalten wird, **dadurch gekennzeichnet, dass** der absolute Wert des Geschwindigkeitsvektors während jeglicher Veränderung des tatsächlichen Unterdruckgrades konstant gehalten wird.

2. Bürstensteuerungsverfahren für eine automatische Autowaschanlage nach Anspruch 1, **dadurch gekennzeichnet, dass** der Winkel des Geschwindigkeitsvektors modifiziert wird.

3. Bürstensteuerungsverfahren für eine automatische Autowaschanlage nach einem oder mehreren der vorangehenden Ansprüche, **dadurch gekennzeichnet, dass** der Winkel durch seine Vergrößerung gemäß der Vergrößerung des tatsächlichen Unterdruckgrades und durch seine Verkleinerung gemäß der Verkleinerung des tatsächlichen Unterdruckgrades modifiziert wird.

4. Bürstensteuerungsverfahren für eine automatische Autowaschanlage nach einem oder mehreren der vorangehenden Ansprüche, **dadurch gekennzeichnet, dass** der Winkel proportional zur Veränderung des tatsächlichen Unterdruckgrades modifiziert wird.

5. Bürstensteuerungsverfahren für eine automatische Autowaschanlage nach einem oder mehreren der vorangehenden Ansprüche, **dadurch gekennzeichnet, dass** die kontinuierliche Steuerung des Geschwindigkeitsvektors ausgeführt wird, um eine Kopie (3) des Profils zu erhalten, die das genaue Profil (4) des Fahrzeugs (2) nachbildet.

6. Bürstensteuerungsvorrichtung für eine automatische Autowaschanlage nach einem oder mehreren der vorangehenden Ansprüche, umfassend eine speicherprogrammierbare Steuerung (7), Mittel zum Erfassen des tatsächlichen Grades an Unterdruck oder Kontaktdruck zwischen der Bürste (1) und dem Fahrzeug (2) und Mittel zur kontinuierlichen Modifizierung des relativen Geschwindigkeitsvektors zwischen der Bürste (1) und dem Fahrzeug (2), um sie das Fahrzeugprofil (4) tangierend zu halten, um jeglichen Unterschied zwischen den Graden des tatsächlichen Unterdrucks und des idealen Unterdrucks zu kompensieren, **dadurch gekennzeichnet, dass** sie Mittel zur Konstanthaltung des absoluten Wertes des Geschwindigkeitsvektors während jeglicher Veränderung des tatsächlichen Unterdruckgrades umfasst.

7. Steuerungsvorrichtung nach dem vorangehenden Anspruch, **dadurch gekennzeichnet, dass** die Mittel der Erfassung einen analogen Sensor umfassen, um die Rotationsmotorabsorption der Bürste (1) zu lesen.

8. Steuerungsvorrichtung nach einem oder mehreren der vorangehenden Ansprüchen, **dadurch gekennzeichnet, dass** die Modifizierungsmittel einen Komparator zum Messen des Unterschiedes zwischen einem idealen Grad und dem tatsächlichen Unterdruckgrad und mindestens einen Inverter für die kontinuierliche Steuerung des Winkels des Geschwindigkeitsvektors umfassen.

9. Automatische Anlage zur automatischen Autowäsche, **dadurch gekennzeichnet, dass** sie ein Steuerungssystem entsprechend einem oder mehreren der vorangehenden Ansprüche umfasst.

## Revendications

1. Procédé de commande de brosse dans un lave-auto automatique, comprenant la configuration d'un niveau idéal de dépression ou de pression de contact entre la brosse (1) et le véhicule (2), la détection du niveau réel de dépression ou de pression de contact entre la brosse (1) et le véhicule (2), et, afin de compenser tous les écarts entre le niveau idéal et le niveau réel de dépression, la variation du vecteur vitesse du mouvement respectif entre la brosse (1) et le véhicule (2) pour le garder tangent au profil (4) du véhicule (2), **caractérisé en ce que** la valeur absolue dudit vecteur vitesse est maintenue constante pendant toutes les variations dudit niveau réel de dépression.

2. Procédé de commande de brosse dans un lave-auto automatique selon la revendication 1, **caractérisé en ce que** l'angle dudit vecteur vitesse varie.

3. Procédé de commande de brosse dans un lave-auto automatique selon une ou plusieurs des revendications précédentes, **caractérisé en ce que** la variation dudit angle consiste en une augmentation en fonction de la hausse dudit niveau réel de dépression, et en une diminution en fonction de la baisse dudit niveau réel de dépression.

**4.** Procédé de commande de brosse dans un lave-auto automatique selon une ou plusieurs des revendications précédentes, **caractérisé en ce que** ledit angle varie proportionnellement à la variation dudit niveau réel de dépression.

**5.** Procédé de commande de brosse dans un lave-auto automatique selon une ou plusieurs des revendications précédentes, **caractérisé en ce que** le contrôle continu dudit vecteur vitesse sert à obtenir une copie (3) de profil qui reproduit le profil (4) exact dudit véhicule (2).

**6.** Dispositif de commande de brosse dans un lave-auto automatique selon une ou plusieurs des revendications précédentes, comprenant un contrôleur à logique programmable (7), des moyens pour détecter le niveau réel de dépression ou de pression de contact entre la brosse (1) et le véhicule (2), et des moyens pour varier en continu le vecteur vitesse d'action respectif entre ladite brosse (1) et ledit véhicule (2), afin de le garder tangent au profil (4) du véhicule pour compenser tous les écarts entre ledit niveau réel de dépression et le niveau idéal de dépression, **caractérisé en ce qu'**il comprend des moyens pour maintenir la valeur absolue dudit vecteur vitesse constante pendant toutes les variations dudit niveau réel de dépression.

**7.** Dispositif de commande selon la revendication précédente, **caractérisé en ce que** lesdits moyens de détection comprennent un capteur analogique pour déterminer l'absorption du moteur de rotation de ladite brosse (1).

**8.** Dispositif de commande selon une ou plusieurs des revendications précédentes, **caractérisé en ce que** lesdits moyens de variation comprennent un comparateur pour mesurer l'écart entre un niveau idéal et ledit niveau réel de dépression, et au moins un onduleur pour le contrôle continu de l'angle dudit vecteur vitesse.

**9.** Installation automatique pour lave-auto automatique, **caractérisée en ce qu'**elle comprend un système de commande conforme à une ou plusieurs des revendications précédentes.

*FIG. 1*

*FIG. 2*

*FIG. 4*

FIG. 3

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 1580403 A1